# EUROPÄISCHE PATENTSCHRIFT

(11) **EP 3 464 440 B1**
(45) Veröffentlichungstag und Bekanntmachung des Hinweises auf die Patenterteilung: **13.05.2020**
(21) Anmeldenummer: 17724082.7
(22) Anmeldetag: 22.05.2017
(51) Int. Cl.: C08K 3/04, C08K 5/09, C08K 5/103, C08K 7/06, C08K 7/14

(54) **POLYCARBONAT-ZUSAMMENSETZUNGEN ENTHALTEND FÜLLSTOFFE, EINE CARBONSÄURE UND DEREN GLYCEROL- ODER DIGLYCEROLESTER**
FILLERS CONTAINING POLYCARBONATE COMPOSITIONS, A CARBOXYLIC ACID AND THEIR GLYCEROL OR DIGLYCEROL ESTERS
COMPOSITIONS DE POLYCARBONATE CONTENANT DES MATIERES DE REMPLISSAGE, ACIDE CARBOXYLIQUE ET SON ESTER DE GLYCEROL OU DIGLYCEROL

(30) Priorität: 24.05.2016 EP 16171097
(43) Veröffentlichungstag der Anmeldung: 10.04.2019
(73) Patentinhaber: Covestro Deutschland AG, 51373 Leverkusen (DE)
(72) Erfinder: WEHRMANN, Rolf, 47800 Krefeld (DE); HEUER, Helmut, Werner, 57074 Siegen (DE); BOUMANS, Anke, 47574 Goch (DE)
(74) Vertreter: Levpat
(86) Internationale Anmeldenummer: PCT/EP2017/062224
(87) Internationale Veröffentlichungsnummer: WO 2017/202751

(56) Entgegenhaltungen:
- EP-A1- 2 664 652
- EP-A1- 2 955 201
- WO-A1-2013/045552
- DATABASE WPI Week 201203 Thomson Scientific, London, GB; AN 2011-Q64112 XP002763916, & JP 2011 256359 A (SUMITOMO DOW LTD) 22. Dezember 2011 (2011-12-22)

## Beschreibung

Die vorliegende Erfindung betrifft sowohl glasfaser- als auch carbonfaserverstärkte Polycarbonat-haltige Zusammensetzungen mit hoher Fließfähigkeit, ausgezeichneter Steifigkeit und guten Flammschutzeigenschaften. Weiterhin betrifft die vorliegende Erfindung die Verwendung der erfindungsgemäßen Zusammensetzungen zur Herstellung von Gehäuseteilen im EE- und IT-Bereich, z.B. für Elektrogehäuse/Schaltkästen oder für Rahmen von LCD-/LED-Bildschirmen sowie für Gehäuseteile von mobilen Kommunikationsendgeräten, wie Smartphones, Tablets, Ultrabooks, Notebooks oder Laptops, aber auch für Navigationsgeräte, Smartwatches oder Herzfrequenzmesser, sowie Elektroanwendungen in Dünnwand-Ausfertigungen, z. B. Haus- und Industrie-Vernetzungseinheiten und Smart Meter Gehäusebauteile, und entsprechende Formteile.

Aus dem Stand der Technik ist bekannt, Kunststoffen wie Polycarbonat Glasfasern oder Carbonfasern hinzuzufügen, welche die Steifigkeit verbessern. Weiterhin sind eine Vielzahl von Flammschutzmitteln bekannt, die für Polycarbonat geeignet sind. Mit der Optimierung der Eigenschaften eines Polycarbonats hinsichtlich Steifigkeit und Flammschutzeigenschaften ist jedoch gleichzeitig eine Verschlechterung der Fließfähigkeit verbunden, was insbesondere im Hinblick auf Dünnwandanwendungen problematisch ist.

Die WO 2013/045552 A1 beschreibt glasfasergefüllte, flammgeschützte Polycarbonate mit einem hohen Maß an Steifigkeit und gleichzeitig guter Zähigkeit. Über die Möglichkeit zur Verbesserung der Fließfähigkeit entsprechender Zusammensetzungen wird nichts gelehrt. Außerdem ist in der US 3 951 903 A der Einsatz von Carbonsäureanhydriden in glasfasergefüllten Polycarbonaten zur Verbesserung der Spannungsrissbeständigkeit beschrieben. In der EP 0 063 769 A2 wird ein Polycarbonat beschrieben, das Glasfasern und Polyanhydrid enthält und eine verbesserte Schlagzähigkeit aufweist. Eine Verbesserung der Fließfähigkeit wird nicht beschrieben.

Herkömmlich wird zur Fließverbesserung BDP (Bisphenol A-Diphosphat) verwendet, und zwar in Mengen von bis zu mehr als 10 Gew.-%, um den gewünschten Effekt zu erzielen. Dadurch wird aber die Wärmeformbeständigkeit stark herabgesetzt.

Eine Aufgabe der vorliegenden Erfindung war es, verstärkte Polycarbonat-haltige Zusammensetzungen mit einer Kombination aus hoher Steifigkeit, hoher Fließfähigkeit und möglichst einer Flammwidrigkeit von UL94 V-0 bei mit 1,5 mm Wandstärke hergestellten Formteilen sowie entsprechende Formteile bereitzustellen.

Überraschenderweise wurde gefunden, dass Glasfaser- und/oder Carbonfaser-haltige Zusammensetzungen auf Basis von Polycarbonat eine verbesserte Fließfähigkeit aufweisen, wenn bestimmte Mengen von Monocarbonsäuren und deren Glycerol- und/oder Diglycerolestern enthalten sind, wobei die Wärmeformbeständigkeit, ermittelt anhand der Vicat-Temperatur, nahezu unverändert erhalten bleibt.

Die Polycarbonatzusammensetzungen, enthaltend die Carbonsäuren und deren Glycerol- und/oder Diglycerolester, zeigen bevorzugt gute Schmelzestabilitäten mit verbesserten rheologischen Eigenschaften, und zwar eine höhere Schmelzevolumenfließrate (MVR), bestimmt nach DIN EN ISO 1133:2012-03 (bei einer Prüftemperatur von 300°C, Masse 1,2 kg) und eine verbesserte Schmelzeviskosität, bestimmt nach ISO 11443:2005. Dabei zeichnen sich die Zusammensetzungen bevorzugt weiterhin durch gute mechanische Eigenschaften aus, messbar zum Beispiel anhand der Kerbschlagzähigkeit, welche nach ISO 7391-2:2006 bestimmt wird, oder anhand der Schlagzähigkeit, welche nach ISO 7391-2:2006 ermittelt wird.

Gegenstand der vorliegenden Erfindung sind daher Zusammensetzungen, enthaltend
A) 20,0 Gew.-% bis 99,45 Gew.-% aromatisches Polycarbonat,
B) 0,50 bis 50,0 Gew.-% Glasfasern oder Carbonfasern,
C) 0,05 Gew.-% bis 10,0 Gew.-% eines Gemischs, enthaltend wenigstens eine gesättigte oder ungesättigte Monocarbonsäure mit einer Kettenlänge von 6 bis 30 C-Atomen und wenigstens einen Ester dieser Monocarbonsäure auf Basis von Glycerol und/oder Digycerol.

Vorzugsweise weisen die Zusammensetzungen
A) 20,0 Gew.-% bis 99,45 Gew.-%, weiter bevorzugt 70,0 bis 94,0 Gew.-%, noch weiter bevorzugt 79,0 bis 89,5 Gew.-% aromatisches Polycarbonat,
B) 0,50 bis 50,0 Gew.-%, weiter bevorzugt 5 bis 25 Gew.-%, noch weiter bevorzugt 10 bis 20 Gew.-% Glasfasern oder Carbonfasern, besonders bevorzugt Glasfasern,
C) 0,05 Gew.-% bis 10,0 Gew.-%, weiter bevorzugt 0,1 bis 8,0 Gew.-%, noch weiter bevorzugt 0,2 bis 6,0 Gew.-%, insbesondere 0,2 bis 1,0 Gew.-% des Gemischs, enthaltend wenigstens eine gesättigte oder ungesättigte Monocarbonsäure mit einer Kettenlänge von 6 bis 30 C-Atomen und wenigstens einen Ester der Monocarbonsäure auf Basis von Glycerol und/oder Digycerol,
D) 0,0 Gew.-% bis 1,0 Gew.-%, weiter bevorzugt 0,005 bis 0,5 Gew.-%, noch weiter bevorzugt 0,01 bis 0,2 Gew.-% Thermostabilisator und
E) 0,0 Gew.-% bis 10,0 Gew.-%, weiter bevorzugt 0,1 bis 3 Gew.-%, noch weiter bevorzugt 0,2 bis 1,0 Gew.-% weitere Additive auf.

Besonders bevorzugt enthalten die Zusammensetzungen
A) 79 Gew.-% bis 90 Gew.-%, bevorzugt bis 89,5 Gew.-% aromatisches Polycarbonat,
B) 8,5 bis 20,5 Gew.-%, bevorzugt 10 bis 20 Gew.-% Glasfasern oder Carbonfasern, besonders bevorzugt Glasfasern,
C) 0,2 bis 1,0 Gew.-%, bevorzugt bis 0,6 Gew.-% des Gemischs, enthaltend wenigstens eine gesättigte oder ungesättigte Monocarbonsäure mit einer Kettenlänge von 6 bis 30 C-Atomen und wenigstens einen Ester der Monocarbonsäure auf Basis von Glycerol und/oder Digycerol,
D) 0,005 bis 0,5 Gew.-%, bevorzugt 0,01 bis 0,2 Gew.-% Thermostabilisator und
E) 0,1 bis 3 Gew.-%, bevorzugt 0,2 bis 1,0 Gew.-%, ganz besonders bevorzugt bis 0,5 Gew.-% weitere Additive auf.

Ganz besonders bevorzugt enthalten die vorbeschriebenen Zusammensetzungen keine weiteren Komponenten, sondern die Mengen der Komponenten A), B), C) und ggf. D) und/oder E) ergänzen sich zu 100 Gew.-%.

Die vorgenannten bevorzugten Ausführungsformen erfindungsgemäßer Zusammensetzungen enthalten ganz besonders bevorzugt als Komponente C mehr als 50 Gew.-% an Ölsäureestern des Glycerols und/oder Diglycerols, bezogen auf das Gesamtgewichts des Gemischs C, und weniger als 3 Gew.-% an freien Carbonsäuren, bezogen auf das Gesamtgewichts des Gemischs C, wobei bevorzugt Ölsäure den größten Anteil an freien Carbonsäuren stellt.

C₁- bis C₄-Alkyl in der nachfolgenden Beschreibung der Erfindung steht im Rahmen der Erfindung beispielsweise für Methyl, Ethyl, n-Propyl, iso-Propyl, n-Butyl, sec.-Butyl, tert.-Butyl, C₁- bis C₆-Alkyl und darüber hinaus beispielsweise für n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,3-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl. C₁- bis C₁₀-Alkyl steht darüber hinaus beispielsweise für n-Heptyl und n-Octyl, Pinakyl, Adamantyl, die isomeren Menthyle, n-Nonyl, n-Decyl. C₁- bis C₃₄-Alkyl steht darüber hinaus beispielsweise für n-Dodecyl, n-Tridecyl, n-Tetradecyl, n-Hexadecyl oder n-Octadecyl. Gleiches gilt für den entsprechenden Alkylrest, beispielsweise in Aralkyl- bzw. Alkylaryl-, Alkylphenyl- oder Alkylcarbonylresten. Alkylenreste in den entsprechenden Hydroxyalkyl- oder Aralkyl- bzw. Alkylarylresten stehen beispielsweise für die den vorangehenden Alkylresten entsprechenden Alkylenreste.

Aryl steht für einen carbocyclischen aromatischen Rest mit 6 bis 34 Gerüstkohlenstoffatomen. Gleiches gilt für den aromatischen Teil eines Arylalkylrestes, auch Aralkylrest genannt, sowie für Arylbestandteile komplexerer Gruppen, wie z.B. Arylcarbonylresten.

Beispiele für C₆- bis C₃₄-Aryl sind Phenyl, o-, p-, m-Tolyl, Naphthyl, Phenanthrenyl, Anthracenyl oder Fluorenyl.

Arylalkyl bzw. Aralkyl bedeutet jeweils unabhängig einen geradkettigen, cyclischen, verzweigten oder unverzweigten Alkyl-Rest nach vorstehender Definition, der einfach, mehrfach oder vollständig durch Aryl-Reste gemäß vorstehender Definition substituiert sein kann.

Im Rahmen der vorliegenden Erfindung beziehen sich die angegebenen Gew.-% der Komponenten A, B, C und ggf. D und/oder E - soweit nicht explizit anders angegeben - jeweils auf das Gesamtgewicht der Zusammensetzung. Die Zusammensetzung kann neben den Komponenten A, B, C und D weitere Komponenten, etwa weitere Additive in Form der Komponente E, enthalten. Ebenso kann die Zusammensetzung einen oder mehrere weitere Thermoplasten enthalten. In einer bevorzugten Ausführungsform enthält die Zusammensetzung keine weiteren Komponenten, sondern die Komponenten A) bis D) ergänzen sich zu 100 Gew.-%; d.h. die Zusammensetzung besteht aus den Komponenten A, B, C und D.

Die erfindungsgemäßen Zusammensetzungen werden vorzugsweise zur Herstellung von Formteilen verwendet. Die Zusammensetzungen weisen bevorzugt eine Schmelze-Volumenfließrate (MVR) von 2 bis 120 cm³/(10 min), weiter bevorzugt von 3 bis 90 cm³/(10 min), bestimmt nach ISO 1133:2012-3 (Prüftemperatur 300°C, Masse 1,2 kg), auf.

Die einzelnen Bestandteile der erfindungsgemäßen Zusammensetzungen sind im Folgenden noch näher erläutert:

### Komponente A

Unter "Polycarbonat" im erfindungsgemäßen Sinne werden sowohl Homopolycarbonate als auch Copolycarbonate verstanden. Dabei können die Polycarbonate in bekannter Weise linear oder verzweigt sein. Erfindungsgemäß können auch Mischungen von Polycarbonaten verwendet werden.

Erfindungsgemäße Zusammensetzungen enthalten als Komponente A 20,0 Gew.-% bis 99,45 Gew.-% aromatisches Polycarbonat. Vorzugsweise beträgt die Menge des aromatischen Polycarbonats in der Zusammensetzung 70,0 bis 94,0 Gew.-%, weiter bevorzugt 79 bis 90 Gew.-%, noch weiter bevorzugt 79,0 bis 89,5 Gew.-%, wobei ein einzelnes Polycarbonat oder eine Mischung mehrerer Polycarbonate vorliegen kann.

Die thermoplastischen Polycarbonate haben mittlere Molekulargewichte M_{w}, bestimmt mittels Gelpermeationschromotographie nach DIN 55672-1:2007-08, kalibriert gegen Bisphenol A-Polycarbonat-Standards unter Verwendung von Dichlormethan als Elutionsmittel, von 10.000 g/mol bis 40.000 g/mol, vorzugsweise von 12.000 g/mol bis 36.000 g/mol, insbesondere von 15.000 g/mol bis 34.000 g/mol.

Die Angaben beziehen sich auf eine Kalibrierung mit linearen Polycarbonaten (aus Bisphenol A und Phosgen) bekannter Molmassenverteilung (469 g/mol bis ca. 100.000 g/mol) der PSS Polymer-Standards Service GmbH, Deutschland. Methode: 2301-0257502-09D (aus dem Jahre 2009 in deutscher Sprache) der Currenta GmbH & Co. OHG, Leverkusen. Dichlormethan als Elutionsmittel. Säulenkombination bei der Gelpermeationschromotographie: aus vernetzten Styrol-Divinylbenzolharzen, fünf analytische Säulen mit einem Durchmesser von 7,5 mm und einer Länge von 300 mm. Partikelgrößen des Säulenmaterials im Bereich von 3 µm bis 20 µm. Konzentration der untersuchten Lösungen: 0,2 Gew.-%. Flussrate: 1,0 ml/min, Temperatur der Lösungen: 30°C. Detektion: mit Hilfe eines Brechungsindex(RI)-Detektors.

Die Herstellung der Polycarbonate, die in den Zusammensetzungen enthalten sind, erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117 bis 299 verwiesen.

Die Herstellung aromatischer Polycarbonate erfolgt z.B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Diphenolen mit beispielsweise Diphenylcarbonat möglich.

Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine, abgeleitet von Isatin- oder Phenolphthaleinderivaten, sowie deren kernalkylierte, kernarylierte und kernhalogenierte Verbindungen.

Bevorzugte Diphenole sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1 -Bis-(4-hydroxyphenyl)-3,3,5-trimethylcyclohexan, sowie die Bisphenole (I) bis (III) 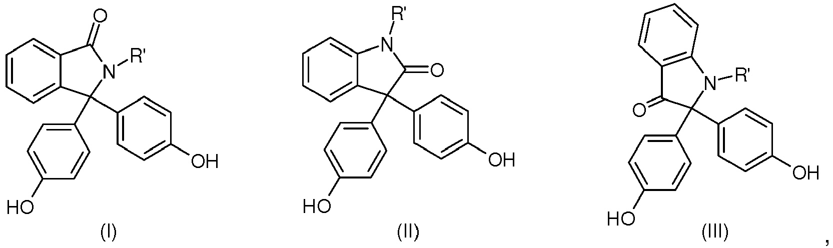 in denen R' jeweils für C₁- bis C₄-Alkyl, Aralkyl oder Aryl, bevorzugt für Methyl oder Phenyl, ganz besonders bevorzugt für Methyl, steht.

Besonders bevorzugte Diphenole sind 2,2-Bis-(4-hydroxyphenyl)-propan (Bisphenol A), 2,2-Bis-(3,5-dimethyl-4-hydroxyphenyl)-propan, 1,1 -Bis-(4-hydroxyphenyl)-cyclohexan, 1,1-Bis-(4-hydroxyphenyl)-3,3,5-trimethylcyclohexan und Dimethyl-Bisphenol A sowie die Diphenole der Formeln (I), (II) und (III).

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate wird nur ein Diphenol eingesetzt, im Fall der Copolycarbonate werden mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen.

Bevorzugte Kettenabbrecher sind die Phenole, welche ein- oder mehrfach mit C₁- bis C₃₀-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Diphenolen.

Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan, sowie von den Diphenolen der Formeln (I), (II) und (III) 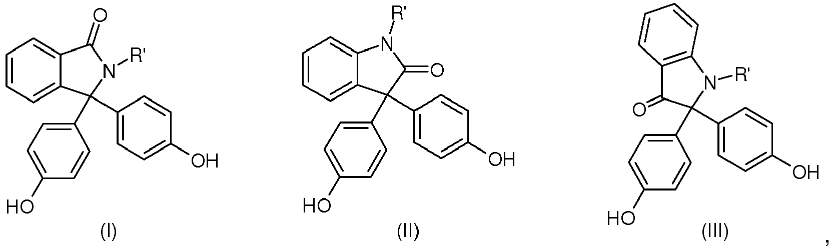 in denen R' jeweils für C₁- bis C₄-Alkyl, Aralkyl oder Aryl, bevorzugt für Methyl oder Phenyl, ganz besonders bevorzugt für Methyl, steht,
abgeleitete Homo- oder Copolycarbonate.

Zur Einarbeitung von Additiven wird die Komponente A bevorzugt in Form von Pulvern, Granulaten oder von Gemischen aus Pulvern und Granulaten eingesetzt.

Als Polycarbonat kann auch eine Mischung aus verschiedenen Polycarbonaten eingesetzt werden, z.B. aus den Polycarbonaten A1 und A2:
Die Menge des aromatischen Polycarbonats A1 beträgt, bezogen auf die Gesamtmenge an Polycarbonat, 25,0 bis 85,0 Gew.-%, bevorzugt 28,0 bis 84,0 Gew.-%, besonders bevorzugt 30,0 bis 83,0 Gew.-%, wobei dieses aromatische Polycarbonat auf Basis von Bisphenol A mit einer bevorzugten Schmelze-Volumenfließrate MVR von 5 bis 25 cm³/(10 min), weiter bevorzugt mit einer Schmelze-Volumenfließrate MVR von 6 bis 22 cm³/(10 min) und besonders bevorzugt mit einer Schmelze-Volumenfließrate MVR von 6 bis 20 cm³/(10 min), bestimmt gemäß ISO 1133 (Prüftemperatur 300°C, Masse 1,2 kg), ist.

Die Menge des pulverförmigen aromatischen Polycarbonats A2 beträgt, bezogen auf die Gesamtmenge an Polycarbonat, 3,0 bis 12,0 Gew.-%, bevorzugt 4,0 bis 11,0 Gew.-%, besonders bevorzugt 4,0 bis 10,0 Gew.-%, wobei dieses aromatische Polycarbonat bevorzugt auf Basis von Bisphenol A mit einer bevorzugten Schmelze-Volumenfließrate MVR von 3 bis 8 cm³/(10 min), weiter bevorzugt mit einer Schmelze-Volumenfließrate MVR von 4 bis 7 cm³/(10 min), und besonders bevorzugt mit einer Schmelze-Volumenfließrate MVR von 6 cm³/(10 min), bestimmt gemäß ISO 1133 (Prüftemperatur 300°C, Masse 1,2 kg), ist.

In einer bevorzugten Ausführungsform enthält die Zusammensetzung als Komponente A ein Copolycarbonat, umfassend eine oder mehrere Monomereinheiten der Formel (1), 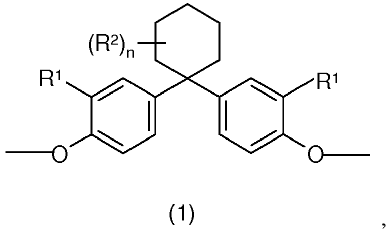 wobei
R¹ für Wasserstoff oder C₁- bis C₄-Alkylreste, bevorzugt für Wasserstoff, steht,
R² für C₁- bis C₄-Alkylreste, bevorzugt einen Methylrest, steht,
n für 0, 1,2 oder 3, bevorzugt 3 steht,
optional in Kombination ist mit einem weiteren aromatischen Homo- oder Copolycarbonat, enthaltend eine oder mehrere Monomereinheiten der allgemeinen Formel (2), 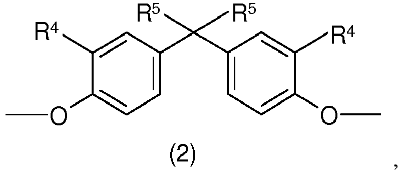 wobei
R⁴ für H, lineare oder verzweigte C₁- bis C₁₀-Alkylreste, bevorzugt lineare oder verzweigte C₁- bis C₆-Alkylreste, besonders bevorzugt für lineare oder verzweigte C₁- bis C₄-Alkylreste, ganz besonders bevorzugt für H oder einen C₁-Alkylrest (Methylrest), steht, und
R⁵ für lineare oder verzweigte C₁- bis C₁₀-Alkylreste, bevorzugt lineare oder verzweigte C₁-bis C₆-Alkylreste, besonders bevorzugt für lineare oder verzweigte C₁- bis C₄-Alkylreste, ganz besonders bevorzugt für einen C₁-Alkylrest (Methylrest), steht;
und wobei das gegebenenfalls zusätzlich vorhandene weitere Homo- oder Copolycarbonat keine Monomereinheiten der Formel (1) aufweist.

Die Monomereinheit(en) der allgemeinen Formel (1) führt man über ein oder mehrere entsprechenden Diphenole der allgemeinen Formel (1') ein: 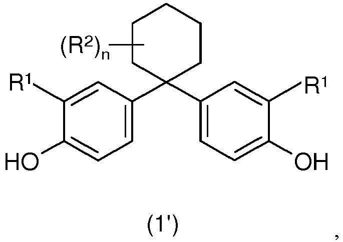 in der
R¹ für Wasserstoff oder einen C₁- bis C₄-Alkylrest, bevorzugt für Wasserstoff,
R² für einen C₁- bis C₄-Alkylrest, bevorzugt Methylrest, und
n für 0, 1, 2 oder 3, bevorzugt 3, stehen.

Die Diphenole der Formeln (1') und ihr Einsatz in Homopolycarbonaten sind beispielsweise aus DE 3918406 bekannt.

Besonders bevorzugt ist 1,1-Bis-(4-hydroxyphenyl)-3,3,5-trimethylcyclohexan (Bisphenol TMC) mit der Formel (la):

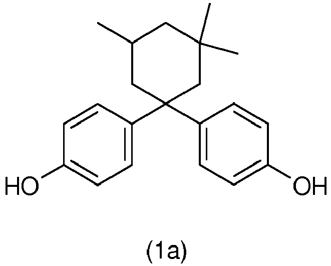

Neben einer oder mehreren Monomereinheiten der Formel (1) können in dem Copolycarbonat ein oder mehrere Monomereinheit(en) der Formel (3) enthalten sein: 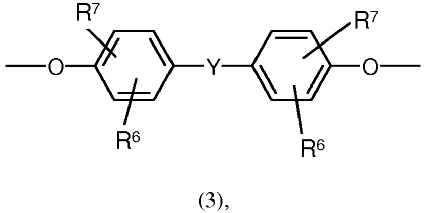 in der
R⁶ und R⁷ unabhängig voneinander für H, C₁- bis C₁₈-Alkyl-, C₁- bis C₁₈-Alkoxy, Halogen wie Cl oder Br oder für jeweils gegebenenfalls substituiertes Aryl oder Aralkyl, bevorzugt für H,
oder C₁- bis C₁₂-Alkyl, besonders bevorzugt für H oder C₁- bis C₈-Alkyl und ganz besonders bevorzugt für H oder Methyl, stehen, und
Y für eine Einfachbindung, -SO₂-, -CO-, -O-, -S-, C₁- bis C₆-Alkylen oder C₂- bis C₅-Alkyliden, ferner für C₆- bis C₁₂-Arylen, welches gegebenenfalls mit weiteren Heteroatome enthaltenden aromatischen Ringen kondensiert sein kann, steht.

Die Monomereinheit(en) der allgemeinen Formel (3) führt man über ein oder mehrere entsprechenden Diphenole der allgemeinen Formel (3a) ein: 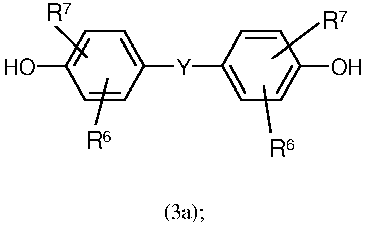 wobei R⁶, R⁷ und Y jeweils die bereits im Zusammenhang mit der Formel (3) erwähnte Bedeutung haben.

Ganz besonders bevorzugte Diphenole der Formel (3a) sind Diphenole der allgemeinen Formel (3b), 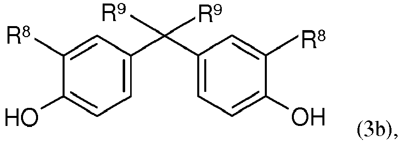 in der R⁸ für H, lineare oder verzweigte C₁- bis C₁₀ -Alkylreste, bevorzugt lineare oder verzweigte C₁- bis C₆ -Alkylreste, besonders bevorzugt für lineare oder verzweigte C₁- bis C₄-Alkylreste, ganz besonders bevorzugt für H oder einen C₁-Alkylrest (Methylrest) steht, und in der R⁹ für lineare oder verzweigte C₁- bis C₁₀-Alkylreste, bevorzugt lineare oder verzweigte C₁- bis C₆-Alkylreste, besonders bevorzugt für lineare oder verzweigte C₁- bis C₄-Alkylreste, ganz besonders bevorzugt für einen C₁-Alkylrest (Methylrest) steht.

Hierbei ist insbesondere das Diphenol (3c) ganz besonders bevorzugt.

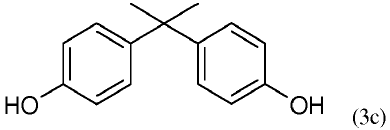

Die Diphenole der allgemeinen Formeln (3a) können sowohl allein als auch im Gemisch miteinander verwendet werden. Die Diphenole sind literaturbekannt oder nach literaturbekannten Verfahren herstellbar (siehe z.B. H. J. Buysch et al., Ullmann's Encyclopedia of Industrial Chemistry, VCH, New York 1991, 5. Ed., Vol. 19, p. 348).

Der Gesamtanteil der Monomereinheiten der Formel (1) im Copolycarbonat beträgt vorzugsweise 0,1 - 88 mol-%, besonders bevorzugt 1 - 86 mol-%, ganz besonders bevorzugt 5 - 84 mol-% und insbesondere 10 - 82 mol-% (Summe Mole der Diphenole der Formel (1') bezogen auf die Summe der Mole aller eingesetzten Diphenole).

Copolycarbonate können als block- und statistische Copolycarbonate vorliegen. Besonders bevorzugt sind statistische Copolycarbonate. Dabei ergibt sich das Verhältnis der Häufigkeit der Diphenolat-Monomereinheiten im Copolycarbonat aus dem Molverhältnis der eingesetzten Diphenole.

Monomereinheiten der allgemeinen Formel (2) führt man über ein Diphenol der allgemeinen Formel (2a) ein: 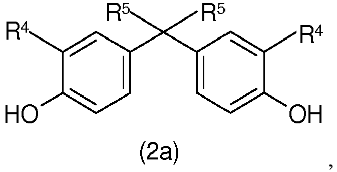 in der R⁴ für H, lineare oder verzweigte C₁- bis C₁₀-Alkylreste, bevorzugt lineare oder verzweigte C₁- bis C₆ -Alkylreste, besonders bevorzugt für lineare oder verzweigte C₁- bis C₄-Alkylreste, ganz besonders bevorzugt für H oder einen C₁-Alkylrest (Methylrest) steht und in der R⁵ für lineare oder verzweigte C₁- bis C₁₀-Alkylreste, bevorzugt lineare oder verzweigte C₁- bis C₆-Alkylreste, besonders bevorzugt für lineare oder verzweigte C₁- bis C₄-Alkylreste, ganz besonders bevorzugt für einen C₁-Alkylrest (Methylrest) steht.

Hierbei ist Bisphenol A ganz besonders bevorzugt.

Neben einer oder mehreren Monomereinheiten der allgemeinen Formeln (2) können in dem gegebenenfalls ferner vorhandenen Homo- oder Copolycarbonat ein oder mehrere Monomereinheiten der Formel (3) enthalten sein, wie sie bereits für das Copolycarbonat beschrieben sind.

Soweit die erfindungsgemäße Zusammensetzung Copolycarbonat, enthaltend Monomereinheiten der Formel (1), aufweist, so beträgt die Gesamtmenge an Copolycarbonat, enthaltend Monomereinheiten der Formel (1), in der Zusammensetzung vorzugsweise mindestens 3,0 Gew.-%, besonders bevorzugt mindestens 5,0 Gew.-%.

In einer bevorzugten Ausführungsform weist die erfindungsgemäße Zusammensetzung als Komponente A ein Blend aus dem Copolycarbonat, enthaltend die Monomereinheiten der Formel (1), und einem Bisphenol A basierten Homopolycarbonat auf.

Soweit die erfindungsgemäße Zusammensetzung Copolycarbonat, enthaltend Monomereinheiten der Formel (1), aufweist, beträgt der Gesamtanteil der Monomereinheiten der Formel (1) in der Komponente A vorzugsweise 0,1 - 88 mol-%, besonders bevorzugt 1 - 86 mol-%, ganz besonders bevorzugt 5 - 84 mol-% und insbesondere 10 - 82 mol-%, bezogen auf die Summe der Mole aller Monomereinheiten der Formeln (1) und (3) in den ein oder mehreren Polycarbonaten der Komponente A.

### Komponente B

Erfindungsgemäße Zusammensetzungen enthalten 0,50 bis 50,0 Gew.-%, insbesondere bis 45,0 Gew.-%, bevorzugt 1,0 bis 35,0 Gew.-%, weiter bevorzugt 5 bis 25 Gew.-%, noch weiter bevorzugt 8 bis 22 Gew.-%, besonders bevorzugt 10 bis 20 Gew.-% Glasfasern und/oder Carbonfasern.

### Glasfasern:

Die Glasfasern basieren auf einer Glaszusammensetzung, ausgewählt aus der Gruppe der M-, E-, A-, S-, R-, AR-, ECR-, D-, Q- oder C-Gläser, wobei E-, S- oder C-Glas bevorzugt sind.

Die Glasfasern können in Form von Endlosfasern (Rovings), Schnittglasfasern, Mahlfasern, Glasfasergeweben oder Mischungen der vorgenannten Formen eingesetzt werden, wobei die Schnittglasfasern sowie die Mahlfasern bevorzugt eingesetzt werden.

Besonders bevorzugt werden Schnittglasfasern eingesetzt.

Die bevorzugte Faserlänge der Schnittglasfasern beträgt vor der Compoundierung 0,5 bis 10 mm, weiter bevorzugt 1,0 bis 8 mm, ganz besonders bevorzugt 1,5 bis 6 mm.

Schnittglasfasern können mit unterschiedlichen Querschnitten eingesetzt werden. Bevorzugt werden runde, elliptische, ovale, 8-förmige und flache Querschnitte eingesetzt, wobei die runden, ovalen sowie flachen Querschnitte besonders bevorzugt sind.

Der Durchmesser eingesetzter Rundfasern beträgt bevorzugt 5 bis 25 µm, weiter bevorzugt 6 bis 20 µm, besonders bevorzugt 7 bis 17 µm.

Für erfindungsgemäße Zusammensetzungen besonders bevorzugte Glasfasern sind Schnittglasfasern mit rundem Querschnitt mit einer Länge von 4 mm bis 5 mm, bevorzugt bis 4,5 mm und einem Faserdurchmesser von 10 bis 15 µm.

Bevorzugte Flach- und Ovalglasfasern weisen ein Querschnittverhältnis aus Höhe zu Breite von ca. 1,0 : 1,2 bis 1,0 : 8,0, bevorzugt 1,0 : 1,5 bis 1,0 : 6,0, besonders bevorzugt 1,0 : 2,0 bis 1,0 : 4,0 auf.

Bevorzugte Flach- und Ovalglasfasern weisen eine durchschnittliche Faserhöhe von 4 µm bis 17 µm, weiter bevorzugt von 6 µm bis 12 µm und besonders bevorzugt 6 µ m bis 8 µm sowie eine durchschnittliche Faserbreite von 12 µm bis 30 µm, weiter bevorzugt 14 µm bis 28 µm und besonders bevorzugt 16 µm bis 26 µm auf.

Die Glasfasern sind bevorzugt mit einer Glasschlichte an der Oberfläche der Glasfaser modifiziert. Bevorzugte Glasschlichten sind Epoxy-modifizierte, Polyurethan-modifizierte und nichtmodifizierte Silanverbindungen sowie Mischungen der vorgenannten Silanverbindungen.

Die Glasfasern können auch nicht mit einer Glasschlichte modifiziert sein.

Die verwendeten Glasfasern zeichnen sich dadurch aus, dass die Auswahl der Faser nicht durch die Wechselwirkungscharakteristik der Faser mit der Polycarbonatmatrix beschränkt ist. Sowohl für eine starke Anbindung an die Polymermatrix als auch bei einer nicht-anbindenden Faser zeigt sich eine Verbesserung der erfindungsgemäßen Eigenschaften der Zusammensetzungen.

Eine Anbindung der Glasfasern an die Polymermatrix ist an den Tieftemperaturbruchoberflächen bei rasterelektronenmikroskopischen Aufnahmen zu erkennen, wobei die größte Anzahl der gebrochenen Glasfasern auf derselben Höhe wie die Matrix gebrochen sind und nur vereinzelt Glasfasern aus der Matrix herausstehen. Rasterelektronenmikroskopische Aufnahmen zeigen für den umgekehrten Fall der nicht-anbindenden Charakteristik, dass die Glasfasern im Tieftemperaturbruch aus der Matrix stark herausstehen oder vollständig herausgeglitten sind.

Sofern Glasfasern enthalten sind, sind besonders bevorzugt 10 bis 20 Gew.-% Glasfasern in der Zusammensetzung enthalten.

### Carbonfasern:

Carbonfasern werden industriell üblicherweise aus Vorstufen wie z. B. Polyacrylfasern durch Pyrolyse (Carbonisierung) gewonnen. Man unterscheidet zwischen Filamentgarn (Endlosfasern) und Kurzfasern.

In den erfindungsgemäßen Zusammensetzungen können Endlosfasern und Kurzfasern verwendet werden. Bevorzugt werden Kurzfasern eingesetzt.

Die Länge der geschnittenen Fasern liegt bevorzugt zwischen 3 mm und 125 mm. Besonders bevorzugt werden Fasern der Länge 3 mm bis 25 mm eingesetzt.

Neben Fasern mit rundem Querschnitt sind auch Fasern mit kubischer Dimension (plättchenförmig) einsetzbar. Geeignete Abmessungen sind beispielsweise
2 mm x 4 mm x 6 mm.

Neben den geschnittenen Fasern werden alternativ bevorzugt gemahlene Carbonfasern eingesetzt. Bevorzugte gemahlene Carbonfasern weisen Längen von 50 µm bis 150 µm auf.

Die Carbonfasern sind gegebenenfalls mit organischen Schlichten gecoatet, um besondere Anbindungen an die Polymermatrix zu ermöglichen.

Kurzschnittfasern und gemahlene Carbonfasern werden den polymeren Basismaterialien üblicherweise durch Compoundierung zugesetzt.

Für Langfäden bzw. Endlosfäden wird üblicherweise mit Hilfe spezieller technischer Verfahren Kohlenstoff in feinsten Fäden angeordnet. Diese Filamente besitzen üblicherweise einen Durchmesser von 3 bis 10 µm. Aus den Filamenten können auch Rovings, Gewebe, Vliese, Bänder, Schläuche oder Ähnliches hergestellt werden.

Sofern die Zusammensetzungen Carbonfasern enthalten, sind bevorzugt 10 bis 30 Gew.-%, weiter bevorzugt 10 bis 25 Gew.-%, noch weiter bevorzugt 12 bis 20 Gew.-% Carbonfasern enthalten.

### Komponente C

Die erfindungsgemäßen Zusammensetzungen enthalten als Komponente C ein Gemisch, enthaltend wenigstens eine gesättigte oder ungesättigte Monocarbonsäure mit einer Kettenlänge von 6 bis 30 C-Atomen und wenigstens einen Ester dieser Monocarbonsäure auf Basis von Glycerol und/oder Diglycerol.

Isomere von Diglycerol, welche die Basis für die erfindungsgemäß eingesetzten Monocarbonsäureester bilden, sind die folgenden:

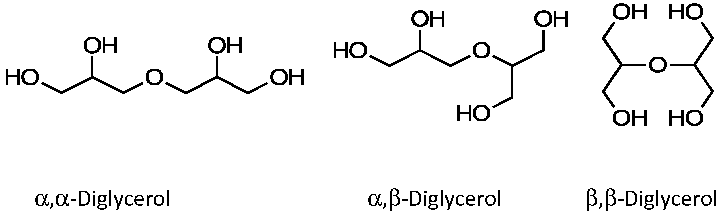

Für die erfindungsgemäß eingesetzten Ester des Diglycerols können solche Isomere dieser Formeln eingesetzt werden, die einfach oder mehrfach verestert sind.

Es können Gemische, enthaltend nur eine Monocarbonsäure und deren Ester, oder ein Gemisch, enthaltend zwei oder mehr Carbonsäuren und deren Ester, verwendet werden.

Geeignete Monocarbonsäuren sind beispielsweise Caprylsäure (C₇H₁₅COOH, Octansäure), Caprinsäure (C₉H₁₉COOH, Decansäure), Laurinsäure (C₁₁H₂₃COOH, Dodecansäure), Myristinsäure (C₁₃H₂₇COOH, Tetradecansäure), Palmitinsäure (C₁₅H₃₁COOH, Hexadecansäure), Margarinsäure (C₁₆H₃₃COOH, Heptadecansäure), Ölsäure (C₁₇H₃₃COOH, *cis*-9*-*Octadecensäure), Stearinsäure (C₁₇H₃₅COOH, Octadecansäure), Arachinsäure (C₁₉H₃₉COOH, Eicosansäure), Behensäure (C₂₁H₄₃COOH, Docosansäure), Lignocerinsäure (C₂₃H₄₇COOH, Tetracosansäure), Palmitoleinsäure (C₁₅H₂₉COOH, (9Z)-Hexadeca-9-ensäure), Petroselinsäure (C₁₇H₃₃COOH, (6Z)-Octadeca-6-ensäure), (9Z)-Octadeca-9-ensäure), Elaidinsäure (C₁₇H₃₃COOH, (9E)-Octadeca-9-ensäure), Linolsäure (C₁₇H₃₁COOH, (9Z,12Z)-Octadeca-9,12-diensäure), alpha- und gamma-Linolensäure (C₁₇H₂₉COOH, (9Z,12Z,15Z)-Octadeca-9,12,15-triensäure und (6Z,9Z,12Z)-Octadeca-6,9,12-triensäure), Arachidonsäure (C₁₉H₃₁COOH, (5Z,8Z,11Z,14Z)-Eicosa-5,8,11,14-tetraensäure), Timnodonsäure (C₁₉H₂₉COOH, (5Z,8Z,11Z,14Z,17Z)-Eicosa-5,8,11,14,17-pentaensäure) und Cervonsäure(C₂₁H₃₁COOH,(4Z,7Z,10Z,13Z,16Z,19Z)-Docosa-4,7,10,13,16,19-hexaensäure).

Bevorzugt sind gesättigte aliphatische Monocarbonsäuren mit einer Kettenlänge von 8 bis 30 C-Atomen, besonders bevorzugt mit 12 bis 24 C-Atomen und ganz besonders bevorzugt mit 14 bis 24 C-Atomen.

Geeignet als Komponente C sind insbesondere Mischungen, die durch Teilveresterung von Glycerol und/oder Diglycerol mit einem Carbonsäuregemisch, enthaltend zwei oder mehr der Monocarbonsäuren mit einer Kettenlänge von 6 bis 30 C-Atomen erhalten werden, woraus ein Estergemisch resultiert. Vorzugsweise enthält das Carbonsäuregemisch Ölsäure, besonders bevorzugt zusätzlich Stearinsäure und/oder Palmitinsäure. Vorzugsweise enthält Komponente C als Estergemisch Monoester und Diester der Ölsäure, der Palmitinsäure und/oder der Stearinsäure mit Glycerol und/oder Diglycerol und das Carbonsäuregemisch, d.h. die entsprechenden Carbonsäuren. Beispiele sind Glycerolmonopalmitat, Glycerolmonooleat, Diglycerolmonopalmitat, Diglycerolmonooleat, Diglycerolmonostearat, Diglyceroldipalmitat oder Diglyceroldioleat. Der Anteil an Dieestern des Diglycerols ist bevorzugt kleiner als der Anteil der Monoester des Diglycerols. Komponente C enthält bevorzugt auch noch freies Glycerol und/oder Diglycerol. Komponente C kann aber auch so weit aufgereinigt sein, dass kein freies Glycerol und/oder Diglycerol mehr enthalten ist. Geeignete Mischungen sind z. B. von Palsgaard® unter dem Handelsnamen Palsgaard® Polymers PGE 8100 kommerziell erhältlich.

Die OH-Zahlen dieser Mischungen liegen vorzugsweise zwischen 180 und 300 mg KOH/g (Methode 2011-0232602-92D der Currenta GmbH & Co. OHG, Leverkusen). Die Säurezahlen dieser Mischungen liegen vorzugsweise zwischen 1 und 6 mg KOH/g (Methode 2011-0527602-14D der Currenta GmbH & Co. OHG, Leverkusen). Die Jodzahl der Mischungen nach Wijs beträgt vorzugsweise zwischen 40 und 80 g Jod/100g (Methode 2201-0152902-95D der Currenta GmbH & Co. OHG, Leverkusen).

Besonders bevorzugt als Komponente B ist ein Gemisch mit einem Gehalt an freien Carbonsäuren von in Summe unter 3 Gew.-%, bezogen auf das Gesamtgewicht des Gemischs C, wobei die Ölsäure den größten Anteil stellt. Ganz besonders bevorzugt beträgt der Gehalt an Ölsäure in dem Gemisch 1,5 bis 2,5 Gew.-%, insbesondere etwa 2 Gew.-%, bezogen auf das Gesamtgewicht des Gemischs B. "Etwa" bedeutet hierbei eine Abweichung von höchstens 10%, bevorzugt höchstens 5 %. Ganz besonders bevorzugt bilden Ölsäureester des Glycerols und des Diglycerols die Hauptbestandteile der Esteranteile der Komponente B. In Summe beträgt ihr Anteil mehr als 50 Gew.-%, bezogen auf das Gesamtgewicht des Gemischs C.

Die Polycarbonat-haltigen Zusammensetzungen enthalten bevorzugt 0,05 bis 10,0 Gew.-%, weiter bevorzugt 0,1 bis 8,0 Gew.-%, noch weiter bevorzugt 0,2 bis 6,0 Gew.-% der Komponente C, noch weiter bevorzugt 0,2 Gew.-% bis 2,0 Gew.-%, weiter bevorzugt 0,2 Gew.-% bis 1,8 Gew.-%, ganz besonders bevorzugt 0,20 bis 1,0 Gew.-% der Komponente C.

### Komponente D

Als Thermostabilisatoren werden bevorzugt Phosphor-Verbindungen mit der Oxidationszahl +III, insbesondere Phosphine und/oder Phosphite, eingesetzt.

Als Thermostabilisatoren eignen sich bevorzugt Triphenylphosphin, Tris-(2,4-di-tert-butylphenyl)phosphit (Irgafos® 168), Tetrakis-(2,4-di-tert-butylphenyl)-[1,1-biphenyl]-4,4'-diylbisphosphonit, Octadecyl-3-(3,5-di-tert-butyl-4-hydroxyphenyl)-propionat (Irganox® 1076), Bis-(2,4-dicumylphenyl)-pentaerythritoldiphosphit (Doverphos® S-9228), Bis-(2,6-di-tert-butyl-4-methylphenyl)-pentaerythritoldiphosphit (ADK STAB PEP-36). Sie werden allein oder im Gemisch (z. B. Irganox® B900 (Gemisch aus Irgafos® 168 und Irganox® 1076 im Verhältnis 1:3) oder Doverphos® S-9228 mit Irganox® B900 bzw. Irganox® 1076) eingesetzt. Die Thermostabilisatoren werden bevorzugt in Mengen von 0,003 bis 1,0 Gew.-%, weiter bevorzugt 0,005 bis 0,5 Gew.-%, noch weiter bevorzugt 0,01 bis 0,2 Gew.-% eingesetzt.

### Komponente E

Zusätzlich sind optional bis zu 10,0 Gew.-%, bevorzugt 0,1 bis 6,0 Gew.-%, besonders bevorzugt 0,1 bis 3,0 Gew.%, ganz besonders bevorzugt 0,2 bis 1,0 Gew.-%, insbesondere bis 0,5 Gew.-% sonstige übliche Additive ("weitere Additive") enthalten. Die Gruppe der weiteren Additive umfasst keine Thermostabilisatoren, da diese bereits als Komponente D beschrieben sind.

Solche Additive, wie sie üblicherweise bei Polycarbonaten zugesetzt werden, sind insbesondere Antioxidantien, Entformungsmittel, Flammschutzmittel, UV-Absorber, IR-Absorber, Antistatika, optische Aufheller, Lichtstreumittel, Farbmittel wie organische Pigmente, anorganische Pigmente wie z. B. Titandioxid, Talk, Silikate oder Quarz und/oder Additive zur Lasermarkierung, wie sie beispielsweise in EP-A 0 839 623, WO-A 96/15102, EP-A 0 500 496 oder "Plastics Additives Handbook", Hans Zweifel, 5th Edition 2000, Hanser Verlag, München beschrieben sind, in den für Polycarbonat üblichen Mengen. Diese Additive können einzeln oder auch im Gemisch zugesetzt werden.

Bevorzugte Additive sind spezielle UV-Stabilisatoren, die eine möglichst geringe Transmission unterhalb 400 nm und eine möglichst hohe Transmission oberhalb von 400 nm besitzen. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin® 234, BASF, Ludwigshafen), 2-(2'-Hydroxy-5'-(tert.-octyl)-phenyl)-benzotriazol (Tinuvin® 329, BASF, Ludwigshafen),), Bis-(3-(2H-benztriazolyl)-2-hydroxy-5-tert.-octyl)methan (Tinuvin® 360, BASF, Ludwigshafen), 2-(4,6-Diphenyl-1,3,5-triazin-2-yl)-5-(hexyloxy)-phenol (Tinuvin® 1577, BASF, Ludwigshafen), sowie Benzophenone wie 2,4-Dihydroxybenzophenon (Chimasorb® 22 , BASF, Ludwigshafen) und 2-Hydroxy-4-(octyloxy)-benzophenon (Chimassorb® 81, BASF, Ludwigshafen), 2,2-Bis[[(2-cyano-1-oxo-3,3-diphenyl-2-propenyl)oxy]-methyl]-1,3-propandiylester (9CI) (Uvinul® 3030, BASF AG Ludwigshafen), 2-[2-Hydroxy-4-(2-ethylhexyl)oxy]phenyl-4,6-di(4-phenyl)phenyl-1,3,5-triazine (Tinuvin® 1600, BASF, Ludwigshafen), Tetraethyl-2,2'-(1,4-phenylen-dimethyliden)-bismalonat (Hostavin® B-Cap, Clariant AG) oder N-(2-Ethoxyphenyl)-N'-(2-ethylphenyl)-ethandiamid (Tinuvin® 312, CAS-Nr. 23949-66-8, BASF, Ludwigshafen).

Besonders bevorzugte spezielle UV-Stabilisatoren sind Tinuvin® 360, Tinuvin® 329 und/oder Tinuvin® 312, ganz besonders bevorzugt sind Tinuvin® 329 und Tinuvin® 312.

Es können auch Mischungen dieser Ultraviolett-Absorber eingesetzt werden.

Bevorzugt enthält die Zusammensetzung Ultraviolett-Absorber in einer Menge bis 0,8 Gew.-%, bevorzugt 0,05 Gew.-% bis 0,5 Gew.-%, weiter bevorzugt 0,1 Gew.-% bis 0,4 Gew.-%, bezogen auf die Gesamtzusammensetzung.

Die erfindungsgemäßen Zusammensetzungen können auch Phosphate oder Sulfonsäureester als Umesterungsstabilisatoren enthalten. Bevorzugt ist Triisooctylphosphat als Umesterungsstabilisator enthalten. Triisooctylphosphat wird bevorzugt in Mengen von 0,003 Gew.-% bis 0,05 Gew.-%, weiter bevorzugt 0,005 Gew.-% bis 0,04 Gew.-% und besonders bevorzugt von 0,01 Gew.-% bis 0,03 Gew.-% eingesetzt.

Die Zusammensetzung kann frei von Entformungsmitteln, z.B. Pentaerythrittetrastearat oder Glycerinmonostearat, sein.

Erfindungsgemäß bevorzugte Zusammensetzungen enthalten als Additiv Ruß, besonders bevorzugt 0,05 bis 0,5 Gew.-%, ganz besonders bevorzugt bis 0,3 Gew.-%.

Besonders bevorzugt ist mindestens ein Thermostabilisator (Komponente D) und gegebenenfalls als weiteres Additiv (Komponente E) ein Umesterungsstabilisator, insbesondere Triisooctylphosphat, oder ein UV-Absorber enthalten.

Als Additiv (Komponente E) kann in erfindungsgemäßen Zusammensetzungen auch ein Schlagzähmodifikator enthalten sein. Beispiele für Schlagzähmodifikatoren sind: Acrylat-core-shell-Systeme oder Butadienkautschuke (Paraloid-Typen von DOW Chemical Company); Olefin-Acrylat-Copolymere wie z. B. Elvaloy®-Typen von DuPont; Siliconacrylatkautschuke wie z. B. die Metablen®-Typen von Mitsubishi Rayon Co., Ltd.

Die Herstellung der erfindungsgemäßen Zusammensetzungen, enthaltend die Komponenten A bis C sowie ggf. D und/oder E, erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den Komponenten B bis E verwendet werden.

Es können auch Vormischungen verwendet werden, die aus Lösungen der Mischungskomponenten in geeigneten Lösungsmitteln hergestellt worden sind, wobei gegebenenfalls in Lösung homogenisiert wird und das Lösungsmittel anschließend entfernt wird.

Insbesondere können hierbei die Komponenten B bis E der erfindungsgemäßen Zusammensetzung durch bekannte Verfahren oder als Masterbatch in das Polycarbonat eingebracht werden.

Die Verwendung von Masterbatchen ist zum Einbringen der Komponenten B bis E, einzeln oder in Mischung, bevorzugt.

In diesem Zusammenhang kann die erfindungsgemäße Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann können die restlichen Ausgangsstoffe einzeln und/oder ebenfalls gemischt hinzugegeben werden.

Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.

Die erfindungsgemäßen Zusammensetzungen können auf üblichen Maschinen, beispielsweise auf Extrudern oder Spritzgussmaschinen, zu beliebigen Formkörpern, wie beispielsweise Folien, Platten oder Flaschen, in üblicher Weise verarbeitet werden.

Die Herstellung der Formteile erfolgt vorzugsweise durch Spritzguss, Extrusion oder aus Lösung in einem Gießprozess.

Die erfindungsgemäßen Zusammensetzungen sind zur Herstellung von Mehrschichtsystemen geeignet. Hierbei wird die Polycarbonat-haltige Zusammensetzung in einer oder mehreren Schicht(en) auf einen geformten Gegenstand aus einem Kunststoff aufgebracht. Das Aufbringen kann zugleich mit oder unmittelbar nach der Formgebung des Formkörpers geschehen, zum Beispiel durch Hinterspritzen einer Folie, Coextrusion oder Mehrkomponentenspritzguss. Das Aufbringen kann aber auch auf den fertig geformten Grundkörper geschehen, z.B. durch Lamination mit einem Film, Umspritzen eines vorhandenen Formkörpers oder durch Beschichtung aus einer Lösung.

Die erfindungsgemäßen Zusammensetzungen sind zur Herstellung von Bauteilen im Automotive-Bereich, etwa für Blenden, Scheinwerferabdeckungen oder -rahmen, Linsen und Kollimatoren oder Lichtleiter sowie zur Herstellung von Rahmenbauteilen im EE (Elektro/Elektronik)- und IT-Bereich geeignet, insbesondere für Anwendungen, die hohe Anforderungen an die Fließfähigkeit stellen (Dünnschichtanwendungen). Solche Anwendungen sind beispielsweise Bildschirme oder Gehäuse, etwa für Ultrabooks oder Rahmen für LED-Display-Technologien, z.B. OLED-Displays oder LCD-Displays oder auch für E-Ink-Geräte. Weitere Anwendungsfelder sind Gehäuseteile von mobilen Kommunikationsendgeräten, wie Smartphones, Tablets, Ultrabooks, Notebooks oder Laptops, aber auch Gehäuseteile für Navigationsgeräte, Smartwatches oder Herzfrequenzmesser, sowie Elektroanwendungen in Dünnwand-Ausfertigungen, z. B. Haus- und Industrie-Vernetzungseinheiten und Smart-Meter-Gehäusebauteile.

Die Formkörper und Extrudate aus den erfindungsgemäßen Zusammensetzungen sowie Formteile, Extrudate und Schichten von Mehrschichtsysteme, enthaltend die erfindungsgemäßen Zusammensetzungen, sind ebenfalls Gegenstand dieser Anmeldung.

Die erfindungsgemäßen Zusammensetzungen zeichnen sich insbesondere dadurch aus, dass sie aufgrund der Anwesenheit von Komponente C über ausgezeichnete rheologische und optische Eigenschaften verfügen. Sie eignen sich daher insbesondere für die Herstellung von anspruchsvollen Spritzgussteilen, besonders für Dünnwandanwendungen, bei denen eine gute Fließfähigkeit erforderlich ist. Beispiele für derartige Anwendungen sind Ultrabook-Gehäuseteile, Laptop-Cover, Scheinwerferabdeckungen, LED-Anwendungen oder Bauteile für E/E-Anwendungen. Dünnwandanwendungen sind bevorzugt solche Anwendungen, bei denen Wandstärken von weniger als etwa 3 mm, bevorzugt weniger als 3 mm, weiter bevorzugt von weniger als 2,5 mm, noch weiter bevorzugt weniger als 2,0 mm, ganz besonders bevorzugt von weniger als 1,5 mm vorliegen. "Etwa" bedeutet hierbei, dass der tatsächliche Wert nicht wesentlich vom genannten Wert abweicht, wobei eine Abweichung von nicht größer als 25 %, bevorzugt nicht größer als 10 %, als "nicht wesentlich" gilt.

Die für die erfindungsgemäßen Zusammensetzungen vorstehend beschriebenen Ausführungsformen gelten - soweit anwendbar - auch für die erfindungsgemäße Verwendung.

Die nachfolgenden Beispiele sollen die Erfindung illustrieren, ohne sie jedoch einzuschränken.

### Beispiele

### 1. Beschreibung der Rohstoffe und Prüfmethoden

Die in den folgenden Beispielen beschriebenen Polycarbonat-basierten Zusammensetzungen wurden auf einem Extruder ZE 25 der Fa. Berstorff mit einem Durchsatz von 10 kg/h durch Compoundierung hergestellt. Die Schmelzetemperatur betrug 275°C.
**Komponente A-1:** Lineares Polycarbonat auf Basis von Bisphenol A mit einer Schmelze-Volumenfließrate MVR von 9,5 cm³/(10 min) (gemäß ISO 1133:2012-03, bei einer Prüftemperatur 300°C und 1,2 kg Belastung).
**Komponente A-2:** Lineares Polycarbonat auf Basis von Bisphenol A mit einer Schmelze-Volumenfließrate MVR von 6 cm³/(10 min) (gemäß ISO 1133:2012-03, bei einer Prüftemperatur von 300°C und 1,2 kg Belastung).
   Die Komponenten A-1 und A-2 enthalten jeweils 250 ppm Triphenylphosphin der Firma BASF SE als **Komponente D-1.**
**Komponente A-3:** Lineares Polycarbonat in Pulverform auf Basis von Bisphenol A mit einer Schmelze-Volumenfließrate MVR von 6 cm³/(10 min) (gemäß ISO 1133:2012-03, bei einer Prüftemperatur von 300°C und 1,2 kg Belastung).
**Komponente A-4:** Lineares Polycarbonat auf Basis von Bisphenol A mit einer Schmelze-Volumenfließrate MVR von 19 cm³/(10 min) (gemäß ISO 1133:2012-03, bei einer Prüftemperatur von 300°C und 1,2 kg Belastung).
**Komponente A-5:** Lineares Polycarbonat in Pulverform auf Basis von Bisphenol A mit einer Schmelze-Volumenfließrate MVR von 19 cm³/(10 min) (gemäß ISO 1133:2012-03, bei einer Prüftemperatur von 300°C und 1,2 kg Belastung).
**Komponente B-1:** CS108F-14P, geschnittene Kurzglasfasern (nicht anbindend) der Firma 3B mit einem durchschnittlichen Faserdurchmesser von 14 µm und einer durchschnittlichen Faserlänge von 4,0 mm vor der Compoundierung.
**Komponente B-2:** CS 7942, geschnittene Kurzglasfasern (anbindend) der Firma Lanxess AG mit einem durchschnittlichen Faserdurchmesser von 14 µm und einer durchschnittlichen Faserlänge von 4,5 mm vor der Compoundierung.
**Komponente C:** Mischung; Palsgaard® Polymers PGE 8100 der Fa. Palsgaard. Es handelt sich dabei um eine Mischung, enthaltend die Ester Glycerinmonooleat (ca. 14 Gew.-%), Diglycerolmonooleat (ca. 45 Gew.-%), Diglyceroldioleat (ca. 14 Gew.-%). Die Mengen an freien Carbonsäuren in dem Gemisch betragen ca. 2 Gew.-% Ölsäure und weniger als jeweils 1 Gew.-% Stearinsäure und Palmitinsäure.
**Komponente E-1:** Triisooctylphosphat (TOF) der Firma Lanxess AG als Umesterungsstabilisator.
**Komponente E-2:** Ruß Black Pearls 800 der Firma Cabot Corporation.
**Komponente E-3:** Kaliumperfluor-1-butansulfonat, kommerziell erhältlich als Bayowet® C4 der Firma Lanxess, Leverkusen, Deutschland, CAS-Nr. 29420-49-3.
**Komponente E-4:** Polytetrafluorethylen (Blendex® B449 (ca. 50 Gew.-% PTFE und ca. 50 Gew. % SAN [aus 80 Gew.-% Styrol und 20 Gew.-% Acrylnitril] der Firma Chemtura).

Die **Vicat-Erweichungstemperatur** VST/B50 als Maß für die Wärmeformbeständigkeit wurde gemäß ISO 306:2014-3 an Prüfkörpern der Abmessung 80 mm x 10 mm x 4 mm mit einer Stempellast von 50 N und einer Aufheizgeschwindigkeit von 50°C/h bzw. 120°C/h mit dem Gerät Coesfeld Eco 2920 der Firma Coesfeld Materialtest bestimmt.

Die Bestimmung des **Schmelze-Volumenfließrate** (MVR) erfolgte nach ISO 1133:2012-03 (überwiegend bei einer Prüftemperatur von 300 °C, Masse 1,2 kg) mit dem Gerät Zwick 4106 der Firma Zwick Roell. Zusätzlich wurde der MVR nach 20 Minuten Vorwärmzeit gemessen. Dies ist ein Maß für die Schmelzestabilität unter erhöhtem thermischem Stress.

Die **Kerbschlagzähigkeit** nach Charpy wurde nach ISO 7391-2:2006 an einseitig angespritzten Prüfstäben der Dimension 80 mm x 10 mm x 3 mm bei Raumtemperatur gemessen.

Die **Schlagzähigkeit** nach Charpy wurde nach ISO 7391-2:2006 an einseitig angespritzten Prüfstäben der Dimension 80 mm x 10 mm x 3 mm bei Raumtemperatur gemessen.

Die Bestimmung der **Scherviskosität (Schmelzeviskosität)** erfolgte in Anlehnung an ISO 11443:2005 mit dem Gerät Visco-Robo 45.00 der Fa. Göttfert.

Das **Zug-E-Modul** wurde gemäß ISO 527-1/-2:1996-04an einseitig angespritzten Schulterstäben mit einem Kern der Dimension 80 mm x 10 mm x 4 mm gemessen

Die **Reißdehnung** - ebenso Streckspannung, Streckdehnung, Reißfestigkeit- wurde mittels Zugversuch gemäß DIN EN ISO 527-1/-2:1996 bestimmt.

Es wurde außerdem die Brennbarkeit der untersuchten Proben beurteilt und klassifiziert, und zwar nach **UL94.** Dazu wurden Probenkörper der Abmessung 125 mm x 13 mm x d(mm) herstellt, wobei die Dicke d dabei der kleinsten Wandstärke in der vorgesehenen Anwendung entspricht. Eine V0-Klassifizierung bedeutet, dass die Flamme nach maximal 10 s von selbst erlischt. Ein brennendes Abtropfen tritt nicht auf. Ein Nachglimmen nach der zweiten Beflammung erfolgt für maximal 30 s.

Die Kugeleindrucktemperatur (KET) wurde nach DIN EN 60695-10-2 bestimmt.

Die Musterplatten wurden jeweils durch Spritzguss bei den in den nachfolgenden Tabellen angegebenen Massetemperaturen hergestellt.

### 2. Zusammensetzungen

**Tabelle 1: Erfindungsgemäße Zusammensetzungen 2 bis 4 und Vergleichsbeispiel 1**

| **Rezeptur** | | **1 (Vergleich)** | **2** | **3** | **4** |
|---|---|---|---|---|---|
| **A-1** | Gew.-% | 79,35 | 79,35 | 74,35 | 69,35 |
| **A-2** | Gew.-% | 3,65 | 3,65 | 3,65 | 3,65 |
| **A-3** | Gew.-% | 6,3 | 5,9 | 5,9 | 6,1 |
| **C** | Gew.-% | - | 0,4 | 0,4 | 0,2 |
| **E-3** | Gew.-% | 0,2 | 0,2 | 0,2 | 0,2 |
| **E-4** | Gew.-% | 0,5 | 0,5 | 0,5 | 0,5 |
| **B-1** | Gew.-% | 10 | 10 | 15 | 20 |
| | | | | | |
| **Prüfungen** | | | | | |
| **MVR** | cm³/10min | 4,9 | 9,6 | 8,8 | 5,8 |
| **IMVR20'** | cm³/10min | 5,6 | 14,2 | 12,7 | 7,5 |
| **Delta MVR/IMVR20'** | | 0,7 | 4,6 | 3,9 | 1,7 |

| **Schmelzeviskosität bei 280°C** | | | | | |
|---|---|---|---|---|---|
| eta 50 | Pa·s | 1272 | 911 | 1015 | 1330 |
| eta 100 | Pa·s | 1106 | 804 | 881 | 1127 |
| eta 200 | Pa·s | 964 | 698 | 757 | 954 |
| eta 500 | Pa·s | 728 | 549 | 591 | 703 |
| eta 1000 | Pa·s | 530 | 424 | 439 | 509 |
| eta 1500 | Pa·s | 424 | 344 | 361 | 410 |
| eta 5000 | Pa·s | 191 | 162 | 168 | 180 |

| **Schmelzeviskosität bei 300°C** | | | | | |
|---|---|---|---|---|---|
| eta 50 | Pa·s | 708 | 474 | 540 | 676 |
| eta 100 | Pa·s | 629 | 407,0 | 486 | 599 |
| eta 200 | Pa·s | 556 | 365 | 419 | 499 |
| eta 500 | Pa·s | 446 | 314 | 343 | 403 |
| eta 1000 | Pa·s | 355 | 259 | 272 | 311 |
| eta 1500 | Pa·s | 298 | 226 | 233 | 268 |
| eta 5000 | Pa·s | 149 | 123 | 125 | 138 |

| **Schmelzeviskosität bei 320°C** | | | | | |
|---|---|---|---|---|---|
| eta 50 | Pa·s | 443 | 282 | 356 | 460 |
| eta 100 | Pa·s | 389 | 245 | 288 | 353 |
| eta 200 | Pa·s | 326 | 219 | 234 | 295 |
| eta 500 | Pa·s | 272 | 176 | 189 | 247 |
| eta 1000 | Pa·s | 231 | 152 | 167 | 203 |
| eta 1500 | Pa·s | 199 | 141 | 150 | 178 |
| eta 5000 | Pa·s | 113 | 86 | 91 | 101 |
| **Vicat VST B50** | °C | 145,9 | 141,6 | 141,4 | 144,4 |
| **KET** | °C | 139 | 134 | 134 | 137 |

| Mechanik | | | | | |
|---|---|---|---|---|---|
| **Charpy Schlagzähigkeit** IS07391/179eU | kJ/m² | 206s | 162s | 127s | 96s |
| **Zug E-Modul** | N/mm² | 3795 | 3844 | 4746 | 5708 |
| **Streckspannung** | N/mm² | 60 | 61 | 61 | 60 |
| **Streckdehnung** | % | 4,6 | 4,7 | 4,3 | 3,9 |
| **Reißfestigkeit** | N/mm² | 44 | 45 | 45 | 49 |
| **Reißdehnung** | % | 23 | 17 | 12 | 7 |

| **Brandversuche** | | | | | |
|---|---|---|---|---|---|
| **UL94 5V in 3,0 mm** | | | | | |
| Stabprüfung | | ja | ja | ja | ja |
| Plattenprüfung | | bestanden | bestanden | bestanden | bestanden |
| Klassifizierung | | 94-5VA | 94-5VA | 94-5VA | 94-5VA |

| **UL94 5V in 2,0 mm** | | | | | |
|---|---|---|---|---|---|
| Stabprüfung | | ja | ja | ja | ja |
| Plattenprüfung | | nicht bestanden | nicht bestanden | nicht bestanden | bestanden |
| Klassifizierung | | 94-5VB | 94-5VB | 94-5VB | 94-5VA |

| **UL94V in 1,5 mm** | | | | | |
|---|---|---|---|---|---|
| Gesamtbeurteilung | | V0 | V0 | V0 | V0 |

| **UL94V in 3,0 mm** | | | | | |
|---|---|---|---|---|---|
| Gesamtbeurteilung | | V0 | V0 | V0 | V0 |

Das Vergleichsbeispiel 1, welches die Komponente C nicht enthält, hat eine deutlich geringere Fließfähigkeit als Beispiel 2. Dies zeigt sich sowohl in den MVR-Werten als auch bei den Scherviskositäten bei unterschiedlichen Messtemperaturen.

Auch die Beispiele 3 und 4, die über größere Mengen an Glasfasern verfügen, aber die Komponente C enthalten, zeigen gute Fließfähigkeiten.

Die sehr guten Flammschutzeigenschaften bleiben erhalten.

**Tabelle 2: Vergleichsbeispiele 5 bis 8 und erfindungsgemäße Beispiele 9 bis 16**

| **Rezeptur** | | **5 (Ver**gleich**)** | **6 (Ver**gleic**h**) | **7 (Ver**gle**i**ch) | **8 (Ver**gleic**h**) | **9** | **10** | **11** | **12** | **13** | **14** | **15** | **16** |
|---|---|---|---|---|---|---|---|---|---|---|---|---|---|
| **A-4** | Gew.-% | 78 | 78 | 78 | 78 | 78 | 78 | 78 | 78 | 78 | 78 | 78 | 78 |
| **A-5** | Gew.-% | 6,99 | 6,83 | 6,99 | 6,83 | 6,59 | 6,43 | 6,59 | 6,43 | 6,39 | 6,23 | 6,39 | 6,23 |
| **C** | Gew.-% | - | - | - | - | 0,4 | 0,4 | 0,4 | 0,4 | 0,6 | 0,6 | 0,6 | 0,6 |
| **B-1** | Gew.-% | 15 | 15 | - | - | 15 | 15 | - | - | 15 | 15 | - | - |
| **B-2** | Gew.-% | - | - | 15 | 15 | - | - | 15 | 15 | - | - | 15 | 15 |
| **E-1** | Gew.-% | 0,01 | 0,01 | 0,01 | 0,01 | 0,01 | 0,01 | 0,01 | 0,01 | 0,01 | 0,01 | 0,01 | 0,01 |
| **E-2** | Gew.-% | - | 0,16 | - | 0,16 | - | 0,16 | - | 0,16 | - | 0,16 | - | 0,16 |
| | | | | | | | | | | | | | |
| **MVR** | ml/(10 min) | 9,4 | 9,5 | 9,8 | 9,8 | 19,5 | 15,9 | 19,0 | 18,2 | 24,2 | 19,2 | 29,0 | 23,9 |
| **IMVR20'** | ml/(10 min) | 9,8 | 9,9 | 10,2 | 9,9 | 22,0 | 18,7 | 21,1 | 21,5 | 28,1 | 24,6 | 32,3 | 29,6 |
| **Delta MVR/IMVR20'** | | **0,4** | **0,4** | **0,4** | **0,1** | **2,5** | **2,8** | **2,1** | **3,3** | **3,9** | **5,4** | **3,3** | **5,7** |
| **Vicat VSTB 50** | °C | 148,8 | 148,5 | 151,2 | 150,8 | 143,5 | 143,5 | 144,9 | 146,0 | 141,0 | 140,7 | 142,5 | 143,0 |

| **Schmelzeviskosität bei 260°C** | | | | | | | | | | | | | |
|---|---|---|---|---|---|---|---|---|---|---|---|---|---|
| 50 | Pa·s | 1445 | 1585 | 1485 | 1585 | 1549 | 1458 | 1356 | 1302 | 1332 | 1355 | 1144 | 1186 |
| 100 | Pa·s | 1363 | 1448 | 1314 | 1386 | 1333 | 1286 | 1191 | 1161 | 1148 | 1183 | 990 | 1051 |
| 200 | Pa·s | 1187 | 1249 | 1136 | 1187 | 1126 | 1098 | 1026 | 1018 | 982 | 1016 | 848 | 910 |
| 500 | Pa·s | 880 | 913 | 826 | 867 | 825 | 804 | 749 | 759 | 737 | 743 | 630 | 695 |
| 1000 | Pa·s | 618 | 627 | 592 | 615 | 564 | 557 | 546 | 548 | 515 | 522 | 469 | 508 |
| 1500 | Pa·s | 477 | 4884 | 466 | 484 | 428 | 436 | 436 | 433 | 402 | 409 | 383 | 407 |
| 5000 | Pa·s | 200 | 205 | 200 | 202 | 182 | 185 | 175 | 185 | 180 | 179 | 163 | 173 |

| **Schmelzeviskosität bei 280°C** | | | | | | | | | | | | | |
|---|---|---|---|---|---|---|---|---|---|---|---|---|---|
| 50 | Pa·s | 852 | 840 | 776 | 776 | 646 | 676 | 646 | 646 | 661 | 617 | 550 | 617 |
| 100 | Pa·s | 745 | 746 | 654 | 695 | 610 | 629 | 569 | 584 | 583 | 584 | 497 | 554 |
| 200 | Pa·s | 665 | 661 | 593 | 613 | 539 | 570 | 495 | 512 | 519 | 523 | 433 | 491 |
| 500 | Pa·s | 530 | 531 | 476 | 497 | 437 | 460 | 407 | 419 | 419 | 431 | 355 | 396 |
| 1000 | Pa·s | 416 | 415 | 370 | 386 | 350 | 369 | 319 | 330 | 333 | 349 | 286 | 314 |
| 1500 | Pa·s | 339 | 336 | 310 | 323 | 291 | 304 | 270 | 277 | 280 | 289 | 241 | 263 |
| 5000 | Pa·s | 155 | 156 | 149 | 154 | 139 | 142 | 136 | 139 | 135 | 134 | 123 | 132 |

| **Schmelzeviskosität bei 300°C** | | | | | | | | | | | | | |
|---|---|---|---|---|---|---|---|---|---|---|---|---|---|
| 50 | Pa·s | 442 | 421 | 417 | 415 | 345 | 390 | 319 | 294 | 375 | 299 | 223 | 356 |
| 100 | Pa·s | 400 | 395 | 373 | 381 | 325 | 357 | 282 | 275 | 331 | 288 | 215 | 324 |
| 200 | Pa·s | 355 | 362 | 340 | 348 | 310 | 324 | 248 | 284 | 282 | 282 | 199 | 275 |
| 500 | Pa·s | 303 | 308 | 291 | 296 | 271 | 271 | 212 | 242 | 239 | 244 | 170 | 219 |
| 1000 | Pa·s | 257 | 256 | 241 | 248 | 222 | 226 | 181 | 193 | 202 | 208 | 148 | 172 |
| 1500 | Pa·s | 218 | 222 | 209 | 214 | 187 | 197 | 160 | 174 | 174 | 180 | 133 | 154 |
| 5000 | Pa·s | 118 | 121 | 114 | 118 | 100 | 105 | 95 | 101 | 102 | 100 | 75 | 91 |

| **Mechanische Eigenschaften** | | | | | | | | | | | | | |
|---|---|---|---|---|---|---|---|---|---|---|---|---|---|
| **Schlagzähigkeit ISO7391/179eU 4 mm RT** | kJ/m² | 110s | 106s | 55s | 50s | 92s | 92s | 42s | 42s | 83s | 91s | 39s | 43s |
| **Zugversuch** | | | | | | | | | | | | | |
| **Streckspannung** | N/mm² | 62 | 62 | 90 | 89 | 65 | 64 | - | - | 66 | 65 | - | - |
| **Streckdehnung** | % | 4,3 | 4,3 | 3,3 | 3,3 | 4,2 | 4,2 | - | - | 4,2 | 4,1 | - | - |
| **Reißfestigkeit** | N/mm² | 46 | 48 | 89 | 88 | 54 | 54 | 88 | 87 | 55 | 52 | 88 | 85 |
| **Reißdehnung** | % | 7,2 | 7,5 | 3,6 | 3,4 | 6 | 6,2 | 2,7 | 2,8 | 5,9 | 6,1 | 2,6 | 2,5 |
| **E-Modul** | N/mm² | 4889 | 4888 | 4902 | 4900 | 5010 | 4872 | 4995 | 4996 | 4913 | 4953 | 5082 | 4963 |
| **UL94V in 1,5 mm** | | | | | | | | | | | | | |
| Gesamtbewertung | s | n.b. | n.b. | V2 | V2 | V2 | n.b. | n.b. | V2 | n.b. | n.b. | n.b. | V2 |

Die Vergleichsbeispiele 5 bis 8, die die Komponente C nicht enthalten, weisen deutlich schlechtere Fließfähigkeiten als die jeweils korrespondieren Beispiele (mit Komponente C) auf. Bei Zusatz von Triisooctylphosphat (Komponente E-1) lässt sich eine weitere Steigerung der Fließfähigkeit beobachten.

Die mechanischen Eigenschaften der erfindungsgemäßen Beispiel 9 bis 16 bleiben weitgehend unverändert erhalten. Dies gilt auch für die Flammschutzeigenschaften.

## Patentansprüche

1. Zusammensetzung, enthaltend
A) 20,0 Gew.-% bis 99,45 Gew.-% aromatisches Polycarbonat,
B) 0,50 bis 50,0 Gew.-% Glasfasern oder Carbonfasern,
C) 0,05 Gew.-% bis 10,0 Gew.-% eines Gemischs, enthaltend wenigstens eine gesättigte oder ungesättigte Monocarbonsäure mit einer Kettenlänge von 6 bis 30 C-Atomen und wenigstens einen Ester dieser Monocarbonsäure auf Basis von Glycerol und/oder Digycerol.

2. Zusammensetzung nach Anspruch 1, **dadurch gekennzeichnet, dass** die Zusammensetzung
A) 70,0 bis 94,0 Gew.-% aromatisches Polycarbonat,
B) 5 bis 25 Gew.-% Glasfasern oder Carbonfasern,
C) 0,2 bis 6,0 Gew.-% des Gemischs, enthaltend wenigstens eine gesättigte oder ungesättigte Monocarbonsäure mit einer Kettenlänge von 6 bis 30 C-Atomen und wenigstens einen Ester der Monocarbonsäure auf Basis von Glycerol und/oder Digycerol,
D) 0,005 bis 0,5 Gew.-% Thermostabilisator und
E) 0,1 bis 3 Gew.-% weitere Additive enthält.

3. Zusammensetzung nach Anspruch 1 oder 2, **dadurch gekennzeichnet, dass** die Zusammensetzung
A) 79,0 bis 89,5 Gew.-% aromatisches Polycarbonat und
B) 10 bis 20 Gew.-% Glasfasern enthält.

4. Zusammensetzung nach einem der vorhergehenden Ansprüche, **dadurch gekennzeichnet, dass** die Zusammensetzung als Komponente C) 0,2 bis 1,0 Gew.-% des Gemischs enthält.

5. Zusammensetzung, bestehend aus
A) 79 Gew.-% bis 90 Gew.-% aromatischem Polycarbonat,
B) 8,5 bis 20,5 Gew.-% Glasfasern,
C) 0,2 bis 1,0 Gew.-% eines Gemischs, enthaltend wenigstens eine gesättigte oder ungesättigte Monocarbonsäure mit einer Kettenlänge von 6 bis 30 C-Atomen und wenigstens einen Ester der Monocarbonsäure auf Basis von Glycerol und/oder Digycerol,
D) 0,005 bis 0,5 Gew.-% Thermostabilisator und
E) 0,1 bis 3 Gew.-% weitere Additive.

6. Zusammensetzung nach einem der vorhergehenden Ansprüche, **dadurch gekennzeichnet, dass** als Carbonsäure Ölsäure enthalten ist und als Ester wenigstens ein Ester der Ölsäure auf Basis von Glycerol und/oder Diglycerol.

7. Zusammensetzung nach einem der vorhergehenden Ansprüche, **dadurch gekennzeichnet, dass** Komponente C mehr als 50 Gew.-% an Ölsäureestern des Glycerols und/oder Diglycerols, bezogen auf das Gesamtgewicht der Komponente C, und weniger als 3 Gew.-% an freien Carbonsäuren, bezogen auf das Gesamtgewicht der Komponente C, enthält.

8. Zusammensetzung nach Anspruch 7, **dadurch gekennzeichnet, dass** Ölsäure den größten Anteil an freien Carbonsäuren stellt.

9. Zusammensetzung nach einem der vorhergehenden Ansprüche, **dadurch gekennzeichnet, dass** Komponente C ein Carbonsäuregemisch umfasst, enthaltend zwei oder mehr Monocarbonsäuren mit einer Kettenlänge von 6 bis 30 C-Atomen, und ein Estergemisch aus Estern des Glycerols und Diglycerols dieser Monocarbonsäuren.

10. Zusammensetzung nach einem der vorhergehenden Ansprüche, **dadurch gekennzeichnet, dass** als Carbonsäuren Stearinsäure und/oder Palmitinsäure enthalten ist/sind.

11. Zusammensetzung nach einem der vorhergehenden Ansprüche, **dadurch gekennzeichnet, dass** die Zusammensetzung Triisooctylphosphat als Thermostabilisator enthält.

12. Zusammensetzung nach einem der vorhergehenden Ansprüche, **dadurch gekennzeichnet, dass** die Zusammensetzung Ruß enthält.

13. Formteile, Extrudate oder Schicht eines Mehrschichtsystems aus einer Zusammensetzung nach einem der Ansprüche 1 bis 12.

14. Formteil nach Anspruch 13, aufweisend eine Wandstärke kleiner 3 mm.

15. Formteil nach einem der Ansprüche 13 oder 14, **dadurch gekennzeichnet, dass** das Formteil ein Gehäuseteil eines Smartphones, Smartmeters, Tablets, Ultrabooks, Notebooks oder Laptops ist.

## Claims

1. Composition comprising
A) 20.0 wt% to 99.45 wt% of aromatic polycarbonate,
B) 0.50 to 50.0 wt% of glass fibres or carbon fibres,
C) 0.05 wt% to 10.0 wt% of a mixture comprising at least one saturated or unsaturated monocarboxylic acid having a chain length of 6 to 30 carbon atoms and at least one ester of this monocarboxylic acid based on glycerol and/or diglycerol.

2. Composition according to Claim 1, **characterized in that** the composition comprises
A) 70.0 to 94.0 wt% of aromatic polycarbonate,
B) 5 to 25 wt% of glass fibres or carbon fibres,
C) 0.2 to 6.0 wt% of the mixture comprising at least one saturated or unsaturated monocarboxylic acid having a chain length of 6 to 30 carbon atoms and at least one ester of the monocarboxylic acid based on glycerol and/or diglycerol.
D) 0.005 to 0.5 wt% of heat stabilizer and
E) 0.1 to 3 wt% of further additives.

3. Composition according to Claim 1 or 2, **characterized in that** the composition comprises
A) 79.0 to 89.5 wt% of aromatic polycarbonate and
B) 10 to 20 wt% of glass fibres.

4. Composition according to any of the preceding claims, **characterized in that** the composition comprises as component C) 0.2 to 1.0 wt% of the mixture.

5. Composition consisting of
A) 79 wt% to 90 wt% of aromatic polycarbonate,
B) 8.5 to 20.5 wt% of glass fibres,
C) 0.2 to 1.0 wt% of a mixture comprising at least one saturated or unsaturated monocarboxylic acid having a chain length of 6 to 30 carbon atoms and at least one ester of the monocarboxylic acid based on glycerol and/or diglycerol,
D) 0.005 to 0.5 wt% of heat stabilizer and
E) 0.1 to 3 wt% of further additives.

6. Composition according to any of the preceding claims, **characterized in that** as carboxylic acid oleic acid is present and as ester at least one ester of oleic acid based on glycerol and/or diglycerol is contained.

7. Composition according to any of the preceding claims, **characterized in that** component C comprises more than 50 wt% of oleic acid esters of glycerol and/or diglycerol based on the total weight of component C and less than 3 wt% of free carboxylic acids based on the total weight of component C.

8. Composition according to Claim 7, **characterized in that** oleic acid makes up the largest proportion of free carboxylic acids.

9. Composition according to any of the preceding claims, **characterized in that** component C comprises a carboxylic acid mixture comprising two or more monocarboxylic acids having a chain length of 6 to 30 carbon atoms and an ester mixture composed of esters of glycerol and diglycerol of these monocarboxylic acids.

10. Composition according to any of the preceding claims, **characterized in that** as carboxylic acids present stearic acid and/or palmitic acid are contained.

11. Composition according to any of the preceding claims, **characterized in that** the composition comprises the heat stabilizer triisooctyl phosphate.

12. Composition according to any of the preceding claims, **characterized in that** the composition comprises carbon black.

13. Mouldings, extrudates or layer of a multilayered system made of a composition according to any of Claims 1 to 12.

14. Moulding according to Claim 13, having a wall thickness of less than 3 mm.

15. Moulding according to one of Claims 13 or 14, **characterized in that** the moulding is a housing part of a smartphone, smart meter, tablet, ultrabook, notebook or laptop.

## Revendications

1. Composition, contenant :
A) 20,0 % en poids à 99,45 % en poids d'un polycarbonate aromatique,
B) 0,50 à 50,0 % en poids de fibres de verre ou de fibres de carbone,
C) 0,05 % en poids à 10,0 % en poids d'un mélange contenant au moins un acide monocarboxylique saturé ou insaturé ayant une longueur de chaîne de 6 à 30 atomes C et au moins un ester de cet acide monocarboxylique à base de glycérol et/ou de diglycérol.

2. Composition selon la revendication 1, **caractérisée en ce que** la composition contient :
A) 70,0 à 94,0 % en poids d'un polycarbonate aromatique,
B) 5 à 25 % en poids de fibres de verre ou de fibres de carbone,
C) 0,2 à 6,0 % en poids du mélange contenant au moins un acide monocarboxylique saturé ou insaturé ayant une longueur de chaîne de 6 à 30 atomes C et au moins un ester de l'acide monocarboxylique à base de glycérol et/ou de diglycérol,
D) 0,005 à 0,5 % en poids d'un thermostabilisateur, et
E) 0,1 à 3 % en poids d'additifs supplémentaires.

3. Composition selon la revendication 1 ou 2, **caractérisée en ce que** la composition contient :
A) 79,0 à 89,5 % en poids d'un polycarbonate aromatique, et
B) 10 à 20 % en poids de fibres de verre.

4. Composition selon l'une quelconque des revendications précédentes, **caractérisée en ce que** la composition contient en tant que composant C) 0,2 à 1,0 % en poids du mélange.

5. Composition, constituée par :
A) 79 % en poids à 90 % en poids d'un polycarbonate aromatique,
B) 8,5 à 20,5 % en poids de fibres de verre,
C) 0,2 à 1,0 % en poids d'un mélange contenant au moins un acide monocarboxylique saturé ou insaturé ayant une longueur de chaîne de 6 à 30 atomes C et au moins un ester de l'acide monocarboxylique à base de glycérol et/ou de diglycérol,
D) 0,005 à 0,5 % en poids d'un thermostabilisateur, et
E) 0,1 à 3 % en poids d'additifs supplémentaires.

6. Composition selon l'une quelconque des revendications précédentes, **caractérisée en ce que** de l'acide oléique est contenu en tant qu'acide carboxylique et au moins un ester de l'acide oléique à base de glycérol et/ou de diglycérol est contenu en tant qu'ester.

7. Composition selon l'une quelconque des revendications précédentes, **caractérisée en ce que** le composant C contient plus de 50 % en poids d'esters de l'acide oléique de glycérol et/ou de diglycérol, par rapport au poids total du composant C, et moins de 3 % en poids d'acides carboxyliques libres, par rapport au poids total du composant C.

8. Composition selon la revendication 7, **caractérisée en ce que** l'acide oléique constitue la plus grande proportion d'acides carboxyliques libres.

9. Composition selon l'une quelconque des revendications précédentes, **caractérisée en ce que** le composant C comprend un mélange d'acides carboxyliques, contenant deux acides monocarboxyliques ou plus ayant une longueur de chaîne de 6 à 30 atomes C, et un mélange d'esters constitué par des esters de glycérol et de diglycérol de ces acides monocarboxyliques.

10. Composition selon l'une quelconque des revendications précédentes, **caractérisée en ce que** l'acide stéarique et/ou l'acide palmitique sont contenus en tant qu'acides carboxyliques.

11. Composition selon l'une quelconque des revendications précédentes, **caractérisée en ce que** la composition contient du phosphate de triisooctyle en tant que thermostabilisateur.

12. Composition selon l'une quelconque des revendications précédentes, **caractérisée en ce que** la composition contient du noir de carbone.

13. Pièces moulées, extrudats ou couche d'un système multicouche en une composition selon l'une quelconque des revendications 1 à 12.

14. Pièce moulée selon la revendication 13, présentant une épaisseur de paroi inférieure à 3 mm.

15. Pièce moulée selon l'une quelconque des revendications 13 ou 14, **caractérisée en ce que** la pièce moulée est une partie de boîtier d'un smartphone, d'un compteur intelligent, d'une tablette, d'un ultrabook, d'un notebook ou d'un ordinateur portable.
